# EUROPÄISCHE PATENTSCHRIFT

(11) **EP 1 141 612 B1**
(45) Veröffentlichungstag und Bekanntmachung des Hinweises auf die Patenterteilung: **18.12.2002**
(21) Anmeldenummer: 99973493.2
(22) Anmeldetag: 15.09.1999
(51) Int. Cl.: F16L 55/34, B08B 9/04

(54) **ROHRMOLCH**
PIPE ROBOT
ECOUVILLON POUR CONDUITES

(30) Priorität: 21.12.1998 DE 19859229
(43) Veröffentlichungstag der Anmeldung: 10.10.2001
(73) Patentinhaber: Schindele, Paul, 87439 Kempten (DE)
(72) Erfinder: Schindele, Paul, 87439 Kempten (DE)
(74) Vertreter: Weber, Joachim, Dr.
(86) Internationale Anmeldenummer: EP9906817
(87) Internationale Veröffentlichungsnummer: WO00037845

(56) Entgegenhaltungen:
- EP-A2- 0 833 096
- FR-A1- 2 491 785
- NO-B1- 303 299
- US-A- 5 497 707
- Derwent's abstract, Nr. A8692 E/04, Woche 8204, XP002900813 & SU,A,820927, (KOSTYLEV M G), 1981-04-17
- Derwent's abstract, Nr. 87-205388/29, Woche 8729, XP002900814 & SU,A,1278044, (S-HEAT TECH TESINSÄ), 1986-12-23

## Beschreibung

Die Erfindung bezieht sich auf einen Rohrmolch, d.h. ein Gerät, welches in der Lage ist, sich in Rohren oder Kanälen zu bewegen, um beispielsweise Inspektions- oder Reparaturarbeiten durchzuführen.

Der Stand der Technik zeigt unterschiedlichste Ausgestaltungen derartiger Rohrmolche oder Transportsysteme. Diese weisen meistens Räder oder Transportbänder auf, mit deren Hilfe sie sich durch die Rohre bewegen. Die bekannten Konstruktionen erfordern, bedingt durch ihren Aufbau, einen relativ großen Rohrdurchmesser, so daß es praktisch nicht möglich ist, auf diese Weise kleinere Rohrquerschnitte zu befahren und in diesen Arbeiten zu verrichten.

Der Stand der Technik zeigt weiterhin Systeme, bei welchen durch mechanisches Verspreizen von Stempeln oder ähnlichem eine Fixierung in einem Rohr erfolgen kann, um weitere Elemente des Systems vorzuschieben oder nachzuziehen, um auf diese Weise das Arbeitsgerät längs des Rohres zu bewegen. Ein derartiges Schreitwerk ist beispielsweise aus der DE 196 24 275 A1 vorbekannt. Derartige Geräte sind aufgrund ihrer Baugröße nur in Rohren mit einem Mindestdurchmesser verwendbar.

Eine Adaptierung an Rohre mit einem anderen Durchmesser ist nicht oder nur mit hohem konstruktiven Aufwand möglich.

Aus der DE 28 27 473 A1 ist eine Einrichtung zur Verschiebung der Geber eines Fehlersuchgerätes innerhalb einer Rohrleitung vorbekannt. Diese Vorrichtung umfaßt zwei voneinander beabstandete, pneumatisch in ihrer radialen Ausdehnung spreizbare, mit einer elastischen Hülle umgebene Hülsen. Bei Druckbeaufschlagung können sich diese somit an der Innenwandung des Rohrs klemmen. Die beiden Hülsen sind mittels eines Faltenbalges verbunden. Dieser expandiert in axialer Richtung bei Druckbeaufschlagung, bei einem Unterdruck wird er in seiner Länge verkürzt. Durch alternierendes Spreizen der Hülsen und Aufbringen eines Überdruckes beziehungsweise Unterdruckes auf den Faltenbalg kann somit die Einrichtung längs des Rohres bewegt werden.

Eine ähnliche Vorrichtung ist aus der DE 44 09 886 C2 bekannt. Diese Vorrichtung umfaßt insgesamt drei radial ausdehnbare Packer, wobei zwei dieser Packer fest miteinander verbunden sind und wobei der dritte Packer über einen teleskopierbaren Zylinder mit den beiden anderen Packern verbunden ist. Somit wird ein Schreitwerk gebildet, welches durch alternatives Spreizen der einzelnen Packer und Ausfahren beziehungsweise Einfahren des Teleskops längs einer Rohrleitung bewegbar ist. Das Teleskop sowie die Packer können beispielsweise hydraulisch betätigt werden.

Der zitierte Stand der Technik zeigt somit jeweils Spreizelemente, welche durch ein längenveränderbares Bauteil miteinander verbunden sind. Dieses längenveränderbare Bauteil ist entweder in Form eines Faltenbalges oder in Form eines teleskopierbaren Rohres ausgebildet. Die Längenveränderung erfolgt durch Überdruck beziehungsweise Unterdruck, so daß das längenveränderbare Element sowohl Druckkräfte als auch Zugkräfte aufbringen muß, um den Rohrmolch im Inneren des Rohres zu bewegen.

Alle vorbekannten Systeme leiden unter dem Nachteil, daß Rohrkrümmungen, Abzweigungen, reduzierte Querschnitte, z.B. durch Ablagerungen oder ähnliches nicht oder nur bedingt befahren werden können, da die Geräte oder Systeme im wesentlichen nicht lenkbar sind oder einen sehr großen Kurvenradius haben.

Die US 5,497,707 beschreibt einen Rohrmolch, bei welchem zwei Gehäuse vorgesehen sind, die jeweils von einem balgartigen Element umgeben sind. Dieses balgartige Spreizelement kann durch Druckbeaufschlagung expandiert werden. In dem expandierten Zustand liegt es gegen die Wandung eines Rohres oder Ähnlichem an. Die beiden Gehäuse sind durch balgartige Verbindungselemente verbunden, die durch Druckbeaufschlagung in Längsrichtung expandierbar sind. Das Nachziehen des jeweils hinteren Gehäuses während einer Vorwärtsbewegung erfolgt durch eine Unterdruckbeaufschlagung der balgartigen Verbindungselemente.

Eine ähnliche Konstruktion ist aus der FR 2 491 785 bekannt. Auch dieser Rohrmolch besitzt zwei balgartige Spreizelemente, die durch Kontraktion eines Verbindungselementes spreizbar sind. Zwischen den beiden Spreizelementen ist ein in Längsrichtung expandierbares oder kontrahierbares Element zwischengeschaltet. Durch eine Längenveränderung dieses Elementes kann eine Bewegung des Rohrmolches erfolgen. Die Steuerung erfolgt hydraulisch.

Der Erfindung liegt die Aufgabe zugrunde, einen Rohrmolch der eingangs genannten Art zu schaffen, welcher bei einfachem Aufbau und einfacher, kostengünstiger Herstellbarkeit sowohl in sehr kleinen Rohrquerschnitten als auch in unterschiedlichen Rohrquerschnitten einsetzbar ist und eine Lenkmöglichkeit aufweist.

Erfindungsgemäß wird die Aufgabe durch die Merkmale des Hauptanspruchs gelöst, die Unteransprüche zeigen weitere vorteilhafte Ausgestaltungen der Erfindung.

Der erfindungsgemäße Rohrmolch weist zumindest ein erstes und ein zweites, ballonartiges oder balgartiges Spreizelement auf, welche unabhängig voneinander spreizbar und lösbar sind, sowie zumindest ein zwischen den Spreizelementen angeordnetes, mit diesen verbundenes, axial wirkendes, durch Druckbeaufschlagung längenveränderbares Verbindungselement.

Der erfindungsgemäße Rohrmolch zeichnet sich durch eine Reihe erheblicher Vorteile aus. Mit Hilfe der beiden ballonartigen oder balgartigen Spreizelemente ist es möglich, den Rohrmolch jeweils (durch Expandierung eines der beiden Spreizelemente) sicher in dem Rohr zu fixieren. Der ballonartige oder balgartige Aufbau der Spreizelemente gewährleistet eine sichere Verspreizung in dem Rohrquerschnitt. Die zur Verspreizung benötigten oder gewünschten Kräfte sind jeweils unabhängig einstellbar, so daß der Rohrmolch auch in Rohren oder Kanälen eingesetzt werden kann, deren Wandungen empfindlich sind und durch größere Spreizkräfte beschädigt oder zerstört werden könnten. Andererseits können durch die ballonartigen Spreizelemente auch sehr große Kräfte aufgebracht werden, um ein sicheres Nachziehen von Versorgungsleitungen zu gewährleisten und um bei Bearbeitungsvorgängen, beispielsweise mittels Fräsen oder anderen Werkzeugen, ausreichende Kräfte aufbringen zu können.

Ein weiterer Vorteil des erfindungsgemäßen Rohrmolches besteht darin, daß dieser, da keine elektrischen Antriebsmittel im Bereich des Rohrmolches erforderlich sind, explosionsgeschützt oder explosionssicher ausgebildet sein kann. Weiterhin ist es vorteilhaft, daß zwischen dem ersten und dem zweiten Spreizelement bei Spreizung beider Elemente ein dichter Zwischenraum geschaffen werden kann, welcher beispielsweise mit Inertgas gefüllt werden kann, um beispielsweise Schutzgasschweißungen o.ä. durchzuführen. Durch die abdichtende Wirkung der Spreizelemente ist es auch möglich, bestimmte Rohrabschnitte gegenüber dem restlichen Rohrsystem abzudichten und beispielsweise bei Vorliegen von Explosionsgefahr oder gefährlichen Gasgemischen zu spülen, um die Explosionsgefahr zu verringern. Der Abdichtvorgang durch die Spreizelemente kann auch dazu verwendet werden, Druckprüfungen in einem Rohr durchzuführen, etwa um dessen Dichtigkeit zu überprüfen.

Der erfindungsgemäße Rohrmolch ist insbesondere in Rohrsystemen vorteilhaft einsetzbar, die nicht rein vertikal oder rein horizontal verlaufen, sondern Neigungen aufweisen oder mit Biegungen oder Abzweigungen versehen sind. Derartige Rohrsysteme finden sich beispielsweise in Chemieanlagen oder im Apparatebau.

Zusätzlich zu der Möglichkeit, reine Inspektionsarbeiten und reine Reparaturarbeiten durchzuführen, kann der Rohrmolch auch dafür eingesetzt werden, weitergehende Prüfungen, beispielsweise Korrosionsprüfungen durchzuführen.

Die ballonartigen oder balgartigen Spreizelemente haben weiterhin den Vorteil, daß diese bei ihrer Entleerung eine deutliche Volumensabnahme haben, so daß das jeweils entleerte Spreizelement durch den Kanal oder das Rohr gezogen bzw. geschoben werden kann, ohne daß die Gefahr besteht, daß es hängenbleibt, sich an Unregelmäßigkeiten der Kanal- oder Rohrwandung verhakt oder beschädigt wird.

Die ballonartigen Spreizelemente, welche bevorzugterweise aus einem elastischen Material, wie etwa Gummi oder ähnlichem oder aber aus einem metallischen Balg (Blechbalg), gefertigt sind, sind ausgesprochen kostengünstig herstellbar. Es ist weiterhin möglich, die Spreizelemente in einfachster Weise an unterschiedliche Rohrquerschnitte anzupassen, so daß der erfindungsgemäße Rohrmolch sowohl in sehr großen als auch in sehr kleinen Rohren oder Kanälen eingesetzt werden kann, teils durch entsprechendes ballonartiges Aufpumpen oder Spreizen der Spreizelemente, teils durch deren konstruktive Anpassung.

Die Verbindung der beiden Spreizelemente durch ein Verbindungselement, welches axial wirkt und längenveränderbar ist, gestattet es, die Spreizelemente schrittweise vor- bzw. zurückzubewegen. Das Verbindungselement kann in vorteilhafter Ausgestaltung der Erfindung ebenfalls ballonartig ausgebildet sein.

Vor dem ersten Spreizelement ist ein längenveränderbares, axial wirkendes Vorschubelement befestigt. Dieses Vorschubelement kann in einer günstigen Ausgestaltung der Erfindung mit einem Geräteträger versehen sein, an welchem beispielsweise Werkzeuge, Kameras, Lichtleiter oder ähnliches gelagert werden können. Die Dimensionierung des Vorschubelements ist im weiteren Bereich an die jeweiligen Einsatzbedingungen anpaßbar.

Das Vorschubelement ist bevorzugterweise ebenfalls ballonartig oder als Faltenbalg ausgebildet, so daß es in einfachster Weise in seiner axialen Länge veränderbar ist.

Besonders günstig ist es, wenn das Vorschubelement mit dem zweiten Spreizelement über ein Zugelement verbunden ist. Bei einer Expandierung des Vorschubelements kann dieses mit Hilfe des Zugelements das nicht gespreizte oder expandierte zweite Spreizelement nachziehen, um auf diese Weise eine schrittweise Vorwärtsbewegung des Rohrmolchs zu realisieren.

Die Spreizelemente sind bevorzugterweise insbesondere radial expandierbar. Im Rahmen der Erfindung ist jedoch auch eine axiale Expansion möglich und nicht hinderlich. Dies erlaubt es, die Spreizelemente in einfachster Weise auszubilden.

Die Spreizelemente, das Verbindungselement und das Vorschubelement sind in günstiger Ausgestaltung aus einem elastischen Material, beispielsweise Gummi, gefertigt. Durch entsprechende Materialauswahl ist der erfindungsgemäße Rohrmolch auch in aggressiven Medien einsetzbar. Da er keine weiteren mechanischen Elemente aufweisen muß, kann er sehr robust ausgebildet sein und ist weitgehend vor Beschädigungen geschützt. Andererseits kann der Rohrmolch auch leicht gereinigt, desinfiziert oder sterilisiert werden, so daß er auch in Bereichen einsetzbar ist, in welchen Keimfreiheit, Sterilität oder ähnliches gefordert sind, beispielsweise im medizinischen Bereich oder in der Nahrungsmittelindustrie. Durch den Aufbau aus elastischem Material ist der Rohrmolch auch explosionsgeschützt, so daß elektrische Leitung, Funkenschlag oder ähnliches ausgeschlossen werden können. Der erfindungsgemäße Rohrmolch ist somit auch unter gefährlichen Einsatzbedingungen verwendbar.

Die Spreizelemente, das Verbindungselement und das Vorschubelement können erfindungsgemäß sowohl hydraulisch als auch pneumatisch betätigbar sein. Somit ist eine Anpassung an die unterschiedlichsten Arbeitsbedingungen möglich.

Besonders günstig ist es, wenn das Vorschubelement in radialer Richtung lenkbar ist. Dies kann beispielsweise dadurch erreicht werden, daß das Vorschubelement mehrere, zueinander parallele, einzeln betätigbare Kammern oder Elemente aufweist. So können beispielsweise vier Luftkammern vorgesehen sein, die ein Schwenken des Vorschubelements ermöglichen. Hierdurch können Werkzeuge oder Inspektionseinrichtungen, die beispielsweise an dem Geräteträger befestigt sind, gezielt zum Einsatz gebracht werden.

Im Rahmen der Erfindung versteht es sich, daß auch das Verbindungselement in radialer Richtung lenkbar sein kann, um auf diese Weise Rohrkrümmungen mit sehr geringem Radius durchschreiten zu können. Auch hierbei kann es günstig sein, wenn das Verbindungselement, ähnlich dem Vorschubelement, mehrere, zueinander parallele, einzeln betätigbare Kammern aufweist.

Zur Durchführung von Kabeln, Schläuchen oder ähnlichem ist der Rohrmolch in günstiger Ausgestaltung mit zumindest einem axialen Kanal versehen. Die Schlauch- oder Rohrdurchführung kann auch dicht ausgeführt sein, so daß es möglich ist, ein Rohr oder einen Kanal mittels des Rohrmolchs dicht abzuschließen, um beispielsweise Dichtigkeitsprüfungen unter erhöhtem Druck durchzuführen.

Die Spreizelemente, das Verbindungselement und das Vorschubelement sind bevorzugterweise jeweils mit Anschluß- und/oder Versorgungsleitungen verbunden, um das Expandieren oder Entleeren der jeweiligen Elemente einzeln realisieren zu können. Hierbei ist es möglich, Ventile oder Absperrelemente jeweils im Bereich der Anschluß- und/oder Versorgungsleitungen oder direkt im Bereich der Spreizelemente, des Verbindungselements oder des Vorschubelements anzuordnen.

Durch die Flexibilität der Spreizelemente, des Verbindungselements und des Vorschubelements ist es somit möglich, mit dem Rohrmolch auch sehr enge Rohrradien zu durchfahren. Für die Fortbewegung spielt es keine Rolle, ob das Rohr oder der Kanal Steigungen oder Gefälle aufweist. Weiterhin können Änderungen des freien Innenquerschnitts problemlos kompensiert werden. Dies erweist sich insbesondere dann als vorteilhaft, wenn das Rohr oder der Kanal durch Ablagerungen oder ähnliches in seinem Querschnitt verengt ist.

Alternativ zu der Verwendung eines Zugelements zur Bewegung der beiden Spreizelemente ist es auch möglich, ein elastisches Element in das Verbindungselement einzusetzen, um bei dessen Entleerung ein Nachziehen des entleerten, benachbarten Spreizelements zu gewährleisten.

Das Verbindungselement kann in einer besonders günstigen Ausgestaltung der Erfindung auch in Form einer Kolben-Zylinder-Einheit ausgebildet sein. Durch Verwendung eines doppelt wirkenden Kolbens kann die Kolbenstange der Kolben-Zylinder-Einheit wahlweise ausgefahren oder zurückgezogen werden. Hierdurch ist die Länge des Verbindungselements auf besonders einfache Weise einstellbar. Besonders günstig ist es dabei, wenn die Ankoppelung der Kolbenstange mittels eines Gelenks erfolgt. Hierdurch ist eine Möglichkeit geschaffen, Kurvenfahrten zu realisieren. Um gezielte Lenkbewegungen auszuführen, kann es auch sehr günstig sein, parallel zueinander mehrere Kolben-Zylinder-Einheiten vorzusehen. Durch unterschiedlich starkes Kontrahieren oder Expandieren dieser Kolben-Zylinder-Einheiten ist es möglich, vorgegebene Lenkbewegungen einzuleiten. Dies ist beispielsweise dann erwünschenswert, wenn Kanalverzweigungen oder ähnliches zu befahren sind. Um den Lenkradius zu vergrößern, kann es dabei günstig sein, hintereinandergeschaltet mehrere Sätze derartiger Kolben-Zylinder-Einheiten anzuordnen.

Durch die Verwendung von Kolben-Zylinder-Einheiten als Verbindungselemente kann nicht nur eine größere Längskraft übertragen werden, es ist vielmehr auch möglich, den Expansions- oder Kontraktionsablauf exakt zu steuern. Dies kann dann vorteilhaft sein, wenn der erfindungsgemäße Rohrmolch beispielsweise in weicheren Rohren oder in flexiblen Rohren verfahren werden soll. Durch die Verwendung eines doppelt wirkenden Zylinders wird für beide Bewegungsrichtungen jeweils nur ein Überdruck benötigt. Durch geeignete Steuerung läßt sich somit eine sehr präzise Bewegung realisieren.

In einer weiteren, besonders günstigen Ausgestaltung der Erfindung ist vorgesehen, daß das Verbindungselement in Form eines zylindrischen Schlauches ausgebildet ist, welcher bei Druckbeaufschlagung seines Innenraums durch Aufweitung kontrahierbar ist. Derartige Schlauchsysteme, welche auch als "fluidic muscle" bezeichnet werden, bieten vielfältige Vorteile. Sie sind relativ leicht, benötigen wenig Energie, können als geschlossene Systeme betrieben werden und sind kostengünstig herstellbar. Bei einem derartig ausgebildeten Verbindungselement ist insbesondere eine sehr gute Anpassung an Rohrkrümmungen zu erzielen, da das Verbindungselement elastisch ausgebildet ist. Um die Rückstellbewegung ausreichend sicherzustellen, kann es vorteilhaft sein, zusätzlich eine Expansionsfeder oder einen Expansionsbalg zu verwenden.

Es versteht sich, daß dieses Verbindungselement auch unter Verwendung mehrerer, parallel zueinander angeordneter Schläuche ausgebildet sein kann, um ein gezieltes Lenkverhalten, ähnlich wie bei mehreren parallelen Kolben-Zylinder-Einheiten, zu realisieren.

Eine weitere, vorteilhafte Ausgestaltung der Erfindung sieht vor, daß hintereinander, in Längsrichtung des Rohrmolchs, mehrere balgartige Verbindungselemente angeordnet sind. Durch seitliche, beispielsweise hydraulisch oder pneumatisch betätigbare Zugelemente oder Lenkelemente ist es möglich, sehr enge Kurvenradien zu realisieren.

Statt des Zugelementes kann auch eine Kontraktion des Vorschubelementes durch Anlegen eines Vakuums das Nachziehen des Spreizelementes bewirken.

Im folgenden wird die Erfindung anhand von Ausführungsbeispielen in Verbindung mit der Zeichnung beschrieben. Dabei zeigt:
- Fig. 1: eine schematische Seitenansicht, teils im Schnitt, eines ersten Ausführungsbeispiels des erfindungsgemäßen Rohrmolchs in einem ersten Betätigungszustand,
- Fig. 2: bis 5 Betätigungsabläufe zur Darstellung der Bewegung des Rohrelements,

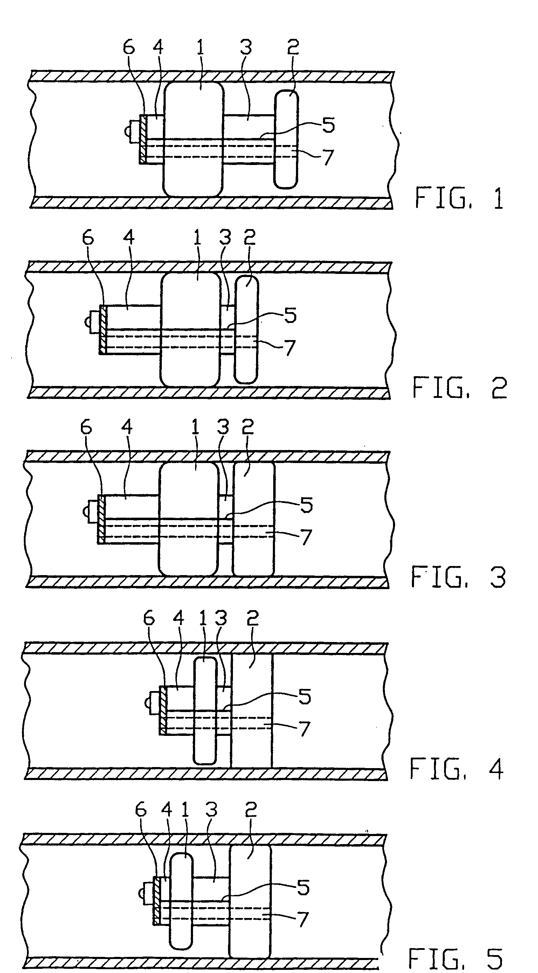

In Fig. 1 ist zunächst im Schnitt ein nicht näher bezeichnetes Rohr dargestellt, in welchem der erfindungsgemäße Rohrmolch läuft. Dieser umfaßt ein erstes Spreizelement 1 sowie ein zweites Spreizelement 2. Die beiden ballonartigen Spreizelemente 1, 2 sind durch ein Verbindungselement 3 verbunden, welches in axialer Richtung, d.h. in Längsrichtung des Rohrmolchs, längenveränderbar ist. Das Verbindungselement 3 ist bevorzugterweise ebenfalls ballonartig ausgebildet. Am vorderen Endbereich des ersten Spreizelements 1 ist ein Vorschubelement 4 angeordnet, dessen vorderer Bereich einen Geräteträger lagert. An diesem können, wie schematisch dargestellt, Werkzeuge, Inspektionseinrichtungen, Kameras oder ähnliches angebracht sein.

Der vordere Bereich des Vorschubelements 4 ist über ein Zugelement 5 mit dem zweiten Spreizelement 2 verbunden. Das Zugelement 5 kann in Form eines Seils oder in ähnlicher Weise ausgebildet sein.

Die in Fig. 1 gezeigte Konstellation zeigt einen Zustand, bei welchem das erste Spreizelement 1 expandiert ist und sich gegen die Wandung des Rohres verspreizt. Das Verbindungselement 3 ist noch expandiert, während sich das zweite Spreizelement 2 bereits in der Kontraktionsphase befindet.

Nachfolgend wird nun, wie in Fig. 2 dargestellt, das Vorschubelement 4 expandiert, so daß sich dieses in Vorwärtsrichtung verlängert. Gleichzeitig (oder zeitlich vorhergehend) wird das Verbindungselement 3 in seiner axialen Richtung verkürzt, beispielsweise durch Entleeren seiner ballonartigen Struktur.

Ein Vergleich der Fig. 1 und 2 zeigt, daß bei dem in Fig. 2 gezeigten Arbeitsschritt das zweite Spreizelement an das erste Spreizelement angenähert wurde, d.h. in Schubrichtung vorwärtsbewegt wurde.

Die Fig. 3 zeigt einen weiteren Verfahrensschritt, bei welchem nunmehr das zweite Spreizelement expandiert wird und sich gegen die Rohrwandung verspreizt. Das erste Spreizelement und das Vorschubelement sind noch expandiert, werden jedoch, wie anschließend in Fig. 4 gezeigt, nachfolgend entleert und entsprechend verkürzt. Die Fig. 4 zeigt einen Zustand, bei welchem nunmehr das zweite Spreizelement 2 gegen die Rohrwandung verspreizt ist, während das erste Spreizelement 1 lose in dem Rohr angeordnet ist.

Durch Längenveränderung des Verbindungselements 3 ist es nunmehr möglich, das erste Spreizelement 1 zusammen mit dem Vorschubelement 4 in axialer Richtung nach vorne zu verschieben.

Als nächster Schritt würde nunmehr der in Fig. 1 gezeigte Vorgang folgen, bei welchem das erste Spreizelement 1 expandiert und verspreizt wird, um nachfolgend, analog dem Arbeitsschritt der Fig. 2, das zweite Spreizelement 2 nachziehen zu können.

Es versteht sich, daß erfindungsgemäß die axiale Länge der Spreizelemente 1 und 2 frei gewählt werden kann. Die Schrittlänge und damit die Vorwärtsbewegungsgeschwindigkeit des Rohrmolchs wird durch die axialen Längen des Verbindungselements 3 und des Vorschubelements 4 bestimmt.

Die Abfolge der Fig. 1 bis 5 zeigt weiterhin, daß das Zugelement 5 dazu dient, das entleerte zweite Spreizelement 2 nachzuziehen (siehe insbesondere Fig. 2). Dieser Nachziehvorgang könnte auch durch eine selbsttätige elastische Verkürzung des Verbindungselements 3, beispielsweise durch Verwendung eines elastischen Elements, wie etwa einer Gummifeder, erfolgen.

## Patentansprüche

1. Rohrmolch mit zumindest einem ersten (1) und einem zweiten (2) ballonartigen oder balgartigen, radial expandierbaren Spreizelement, welche unabhängig voneinander verspreizbar und lösbar sind, sowie mit zumindest einem zwischen den Spreizelementen (1, 2) angeordneten, mit diesen verbundenen, axial wirkenden, längenveränderbaren Verbindungselement (3), **gekennzeichnet durch** ein in Bewegungsrichtung vor einem ersten Spreizelement (1) angeordnetes, mit diesem verbundenen, axial wirkenden, längenveränderbaren Vorschubelement (4), und **durch** ein das Vorschubelement (4) mit dem zweiten Spreizelement (2) verbindendes Zugelement (5).

2. Rohrmolch nach Anspruch 1, **dadurch gekennzeichnet, daß** die Spreizelemente (1, 2) das Verbindungselement (3) und/oder das Vorschubelement (4) aus einem elastischen Material gefertigt sind.

3. Rohrmolch nach einem der Ansprüche 1 oder 2, **dadurch gekennzeichnet, daß** die Spreizelemente (1, 2) das Verbindungselement (3) und/oder das Vorschubelement (4) hydraulisch betätigbar sind.

4. Rohrmolch nach einem der Ansprüche 1 oder 2, **dadurch gekennzeichnet, daß** die Spreizelemente (1, 2) das Verbindungselement (3) und/oder das Vorschubelement (4) pneumatisch betätigbar sind.

5. Rohrmolch nach einem der Ansprüche 1 bis 4, **dadurch gekennzeichnet, daß** das Vorschubelement (4) in radialer Richtung lenkbar ist.

6. Rohrmolch nach Anspruch 5, **dadurch gekennzeichnet, daß** das Vorschubelement (4) mehrere, zueinander parallele, einzeln betätigbare Kammern aufweist.

7. Rohrmolch nach einem der Ansprüche 1 bis 6, **dadurch gekennzeichnet, daß** das Verbindungselement (3) in radialer Richtung lenkbar ist.

8. Rohrmolch nach Anspruch 7, **dadurch gekennzeichnet, daß** das Verbindungselement (3) mehrere, zueinander parallele, einzeln betätigbare Kammern aufweist.

9. Rohrmolch nach einem der Ansprüche 1 bis 8, **dadurch gekennzeichnet, daß** das Vorschubelement (4) mit einem Geräteträger (6) versehen ist.

10. Rohrmolch nach einem der Ansprüche 1 bis 9, **dadurch gekennzeichnet, daß** das Verbindungselement (3) balgartig ausgebildet ist.

11. Rohrmolch nach Anspruch 10, **dadurch gekennzeichnet, daß** das Verbindungselement (3) in Form eines zylindrischen Schlauches ausgebildet ist, welcher bei Druckbeaufschlagung des Innenraums durch Aufweitung kontrahierbar ist.

12. Rohrmolch nach Anspruch 10, **dadurch gekennzeichnet, daß** hintereinander mehrere balgartige Verbindungselemente (3) angeordnet sind.

13. Rohrmolch nach Anspruch 12, **dadurch gekennzeichnet, daß** die mehreren balgartigen Verbindungselemente (3) mittels mehrerer Lenkelemente lenkbar sind.

14. Rohrmolch nach einem der Ansprüche 1 bis 13, **dadurch gekennzeichnet, daß** das Verbindungselement (3) mehrere, zueinander parallele, einzeln betätigbare Kammern aufweist.

15. Rohrmolch nach einem der Ansprüche 1 bis 9, **dadurch gekennzeichnet, daß** das Verbindungselement (3) in Form einer doppelt wirkenden Kolben-Zylinder-Einheit ausgebildet ist.

16. Rohrmolch nach Anspruch 15, **dadurch gekennzeichnet, daß** ein Zylinder der Kolben-Zylinder-Einheit einem Spreizelement zugeordnet ist und daß eine Kolbenstange der Kolben-Zylinder-Einheit mit einem anderen Spreizelement verbunden ist.

17. Rohrmolch nach Anspruch 16, **dadurch gekennzeichnet, daß** die Kolbenstange der Kolben-Zylinder-Einheit mit dem jeweiligen Spreizelement mittels eines Gelenks verbunden ist.

18. Rohrmolch nach einem der Ansprüche 15 bis 17, **dadurch gekennzeichnet, daß** mehrere Kolben-Zylinder-Einheiten, die im wesentlichen parallel wirken, vorgesehen sind.

19. Rohrmolch nach einem der Ansprüche 1 bis 18, **dadurch gekennzeichnet, daß** die Spreizelemente (1, 2) insbesondere radial expandierbar sind.

20. Rohrmolch nach einem der Ansprüche 1 bis 19, **dadurch gekennzeichnet, daß** der Rohrmolch mit zumindest einem axialen Kanal (7) zur Durchführung von Kabeln, Schläuchen oder dergleichen versehen ist.

21. Rohrmolch nach einem der Ansprüche 1 bis 20, **dadurch gekennzeichnet, daß** die Spreizelemente (1, 2) das Verbindungselement (3) und/oder das Vorschubelement (4) jeweils mit Anschluß- und/oder Versorgungsleitungen verbunden sind.

22. Rohrmolch nach einem der Ansprüche 1 bis 21, **dadurch gekennzeichnet, daß** die Spreizelemente (1, 2) das Verbindungselement (3) und/oder das Vorschubelement (4) und/oder die Anschluß- und/oder die Versorgungsleitung jeweils mit zumindest einem Ventil oder Absperrelement versehen sind.

## Claims

1. A pipe robot having at least a first (1) and a second (2) balloon-type or bellows-type, radial expandable expansion member, which can be braced and released independently of one another, and also having at least one connection element (3) that is disposed between the expansion members (1, 2), is connected thereto, acts axially and is variable in length,
**characterised by** a feed member (4) which is disposed in the direction of movement in front of a first expansion member (1), is connected thereto, acts axially, and is variable in length,
**and by** a tension member (5) connecting the feed member (4) to the second expansion member (2).

2. A pipe robot according to Claim 1,
**characterised in that** the expansion members (1, 2), the connection element (3) and/or the feed member (4) are made from an elastic material.

3. A pipe robot according to one of Claims 1 or 2,
**characterised in that** the expansion members (1, 2), the connection element (3) and/or the feed member (4) can be hydraulically operated.

4. A pipe robot according to one of Claims 1 or 2,
**characterised in that** the expansion members (1, 2), the connecting element (3) and/or the feed member (4) can be pneumatically operated.

5. A pipe robot according to one of Claims 1 to 4,
**characterised in that** the feed member (4) can be steered in the radial direction.

6. A pipe robot according to Claim 5,
**characterised in that** the feed member (4) comprises several mutually parallel, individually operable chambers.

7. A pipe robot according to one of Claims 1 to 6,
**characterised in that** the connection element (3) can be steered in the radial direction.

8. A pipe robot according to Claim 7,
**characterised in that** the connection element (3) comprises several mutually parallel, individually operable chambers.

9. A pipe robot according to one of Claims 1 to 8,
**characterised in that** the feed member (4) is provided with a tool carrier (6).

10. A pipe robot according to one of Claims 1 to 9,
**characterised in that** the connection element (3) has a bellows-type construction.

11. A pipe robot according to Claim 10,
**characterised in that** the connection element (3) is constructed in the form of a cylindrical hose, which can be contracted when the interior space is pressurised by expansion.

12. A pipe robot according to Claim 10,
**characterised in that** several bellows-type connection elements (3) are disposed one behind the other.

13. A pipe robot according to Claim 12,
**characterised in that** the several bellows-type connection members (3) can be steered by means of several steering elements.

14. A pipe robot according to one of Claims 1 to 13,
**characterised in that** the connection element (3) comprises several mutually parallel, individually operated chambers.

15. A pipe robot according to one of Claims 1 to 9,
**characterised in that** the connection element (3) is constructed in the form of a double-acting piston-cylinder unit.

16. A pipe robot according to Claim 15,
**characterised in that** a cylinder of the piston-cylinder unit is associated with an expansion member and **in that** a piston rod of the piston-cylinder unit is connected to another expansion member.

17. A pipe robot according to Claim 16,
**characterised in that** the piston rod of the piston-cylinder unit is connected to the respective expansion member by means of an articulation.

18. A pipe robot according to one of Claims 15 to 17,
**characterised in that** several piston-cylinder units, which act substantially parallel, are provided.

19. A pipe robot according to one of Claims 1 to 18,
**characterised in that** the expansion members (1, 2) can be expanded, in particular radially.

20. A pipe robot according to one of Claims 1 to 19,
**characterised in that** the pipe robot is provided with at least one axial duct (7) for the passage of cables, hoses or the like.

21. A pipe robot according to one of Claims 1 to 20,
**characterised in that** the expansion members (1, 2), the connection element (3) and/or the feed member (4) are in each case connected to connecting and/or supply lines.

22. A pipe robot according to one of Claims 1 to 21,
**characterised in that** the expansion members (1, 2), the connection element (3) and/or the feed member (4) and/or the connection and/or supply line are in each case provided with at least one valve or shutoff element.

## Revendications

1. Ecouvillon comportant au moins un premier (1) et un deuxième (2) éléments radialement expansibles du type ballon ou du type soufflet, qui peuvent être déployés et détachés indépendamment l'un de l'autre, ainsi qu'au moins un élément de liaison (3) à action axiale et variable en longueur disposé entre les éléments expansibles (1, 2) et relié à ceux-ci, **caractérisé par** un élément de poussée (4) variable en longueur, à action axiale, disposé en amont d'un premier élément expansible (1) dans le sens du mouvement et relié à celui-ci, et par un élément de traction (5) reliant l'élément de poussée (4) au deuxième élément expansible (2).

2. Ecouvillon selon la revendication 1, **caractérisé en ce que** les éléments expansibles (1, 2), l'élément de liaison (3) et/ou l'élément de poussée (4) sont réalisés à partir d'un matériau élastique.

3. Ecouvillon selon une des revendications 1 et 2, **caractérisé en ce que** les éléments expansibles (1, 2), l'élément de liaison (3) et/ou l'élément de poussée (4) peuvent être actionnés de manière hydraulique.

4. Ecouvillon selon une des revendications 1 et 2, **caractérisé en ce que** les éléments expansibles (1, 2), l'élément de liaison (3) et/ou l'élément de poussée (4) peuvent être actionnés de manière pneumatique.

5. Ecouvillon selon une des revendications 1 à 4, **caractérisé en ce que** l'élément de poussée (4) est dirigeable dans le sens radial.

6. Ecouvillon selon la revendication 5, **caractérisé en ce que** l'élément de poussée (4) présente plusieurs chambres parallèles les unes aux autres pouvant être actionnées individuellement.

7. Ecouvillon selon une des revendications 1 à 6, **caractérisé en ce que** l'élément de liaison (3) est dirigeable dans le sens radial.

8. Ecouvillon selon la revendication 7, **caractérisé en ce que** l'élément de liaison (3) présente plusieurs chambres parallèles les unes aux autres pouvant être actionnées individuellement.

9. Ecouvillon selon une des revendications 1 à 8, **caractérisé en ce que** l'élément de poussée (4) est pourvu d'un support d'appareils (6).

10. Ecouvillon selon une des revendications 1 à 9, **caractérisé en ce que** l'élément de liaison (3) présente une forme du type soufflet.

11. Ecouvillon selon la revendication 10, **caractérisé en ce que** l'élément de liaison (3) présente la forme d'un tuyau flexible cylindrique pouvant être contracté par élargissement suite à une application de pression dans l'espace intérieur.

12. Ecouvillon selon la revendication 10, **caractérisé en ce que** plusieurs éléments de liaison (3) du type soufflet sont disposés les uns derrière les autres.

13. Ecouvillon selon la revendication 12, **caractérisé en ce que** les plusieurs éléments de liaison (3) du type soufflet sont orientables à l'aide de plusieurs éléments d'orientation.

14. Ecouvillon selon une des revendications 1 à 13, **caractérisé en ce que** l'élément de liaison (3) présente plusieurs chambres parallèles les unes aux autres pouvant être actionnées individuellement.

15. Ecouvillon selon une des revendications 1 à 9, **caractérisé en ce que** l'élément de liaison (3) présente la forme d'une unité piston-cylindre à double effet.

16. Ecouvillon selon la revendication 15, **caractérisé en ce qu'**un cylindre de l'unité piston-cylindre est associé à un élément expansible, et **en ce qu'**une tige de piston de l'unité piston-cylindre est reliée à un autre élément expansible.

17. Ecouvillon selon la revendication 16, **caractérisé en ce que** la tige de piston de l'unité piston-cylindre est reliée à l'élément expansible respectif à l'aide d'une articulation.

18. Ecouvillon selon une des revendications 15 à 17, **caractérisé en ce que** plusieurs unités piston-cylindre à action pour l'essentiel parallèle sont prévues.

19. Ecouvillon selon une des revendications 1 à 18, **caractérisé en ce que** les éléments expansibles (1, 2) sont notamment expansibles dans le sens radial.

20. Ecouvillon selon une des revendications 1 à 19, **caractérisé en ce que** l'écouvillon est pourvu d'au moins un canal axial (7) pour le passage de câbles, de tuyaux flexibles ou similaires.

21. Ecouvillon selon une des revendications 1 à 20, **caractérisé en ce que** les éléments expansibles (1, 2), l'élément de liaison (3) et/ou l'élément de poussée (4) sont respectivement reliés à des lignes de raccordement et/ou d'alimentation.

22. Ecouvillon selon une des revendications 1 à 21, **caractérisé en ce que** les éléments expansibles (1, 2), l'élément de liaison (3) et/ou l'élément de poussée (4) et/ou la ligne de raccordement et/ou d'alimentation sont respectivement pourvus d'au moins une vanne ou d'un élément d'arrêt.
